Europäisches Patentamt

European Patent Office

Office européen des brevets

(19)

(11) Publication number: **0 325 490**

**A2**

(12)

# EUROPEAN PATENT APPLICATION

(21) Application number: **89300574.4**

(22) Date of filing: **20.01.89**

(51) Int. Cl.⁴: **A 01 G 9/00**

(30) Priority: **21.01.88 GB 8801298**

(43) Date of publication of application:
**26.07.89 Bulletin 89/30**

(84) Designated Contracting States:
**AT BE CH DE ES FR GB GR IT LI LU NL SE**

(71) Applicant: **CORRUPLAST LIMITED**
**Correx House Madleaze Industrial Estate**
**Bristol Road Gloucester, GL1 5SG (GB)**

(72) Inventor: **Haines, Clive Peter**
**Woodcroft Tibberton**
**Gloucester Gloucestershire, GL19 3AQ (GB)**

(74) Representative: **Johnson, Terence Leslie et al**
**Edward Evans & Co. Chancery House 53-64 Chancery Lane**
**London WC2A 1SD (GB)**

(54) **Apparatus for protecting a plant.**

(57) A tree shelter (1) comprises a tubular housing (2) of equiangular triangular transverse cross-section is formed form a single blank (3) of extended fluted plastics material so that one free edge (5) parallel to flutes (8), extends into a corner of the triangle and the other edge (4) lies substantially on the centre line of one side of the triangle so that it is hidden behind a support stake (14).

FIG.2.

EP 0 325 490 A2

# Description

## APPARATUS FOR PROTECTING A PLANT

The invention relates to apparatus for protecting a plant, such as a young tree during growth.

According to the invention there is provided apparatus for protecting a young plant such as a tree during growth, comprising a tubular housing, characterised in that the housing is of substantially triangular configuration in transverse cross-section and in that it is formed from a single blank of material opposite side of which are overlapped so that one edge extends into a corner of the housing.

The triangle may preferably be an equilateral triangle

The top of the housing may be folded over, to provide a stiffened top which may also minimise abrasion of a tree, in use.

The blank may include securing means such as ties, preferably wire ties, inserted through holes in the blank.

Apparatus according to the invention is hereinafter described, by way of example, with reference to the accompanying drawings.

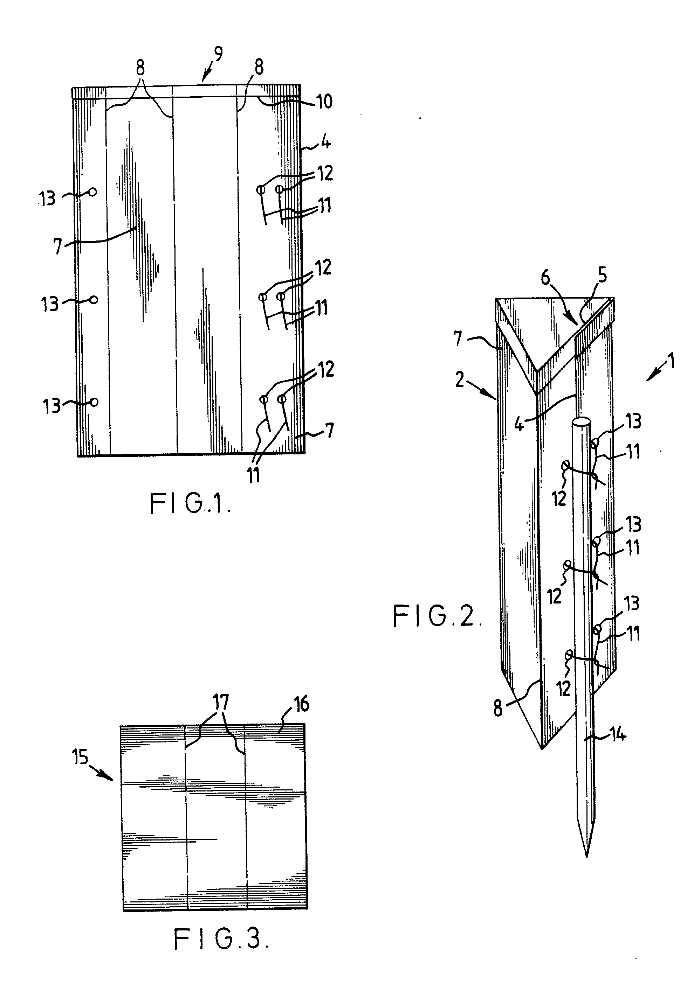

Fig. 1 is a plan view of a plan from which apparatus according to the invention is erected;

Fig. 2 is a perspective view of the apparatus in use; and

Fig. 3 is a plan view of a blank for an insert for use with the apparatus.

Referring to the drawings, there is shown apparatus 1 for protecting a plant such as a young tree during growth, comprising a tubular housing (2) of substantially triangular configuration in transverse cross-section formed from a single blank (3) of material opposite sides (4) and (5) of which are overlapped so as to provide a double wall thickness (6) over a substantial length of one side of the housing (2).

The blank (3) comprises a rectangular blank of extruded fluted material such as that sold under the registered trade mark "CORREX". The flutes (7) run from the top to bottom (as viewed) and are therefore parallel, or substantially so, to fold or crease lines (8). One edge (9) (the top in use) is turned over and welded down to provide a welt which strengthens the erected housing (2) and, as the free edge (10) is outside in use, presents a smooth turn-over top surface which minimises abrasion and thus damage to a growing tree (or other plant).

There is securing means comprising U-shaped integral wire ties (11) projecting through holes (12) adjacent one side (4) and holes (13) adjacent the opposite side (5).

In use the blank (3) is folded about the crease lines (8) so the opposite edges (4) and (5) overlap with the free edge of one side (4) on the "centre" line and the free edges of the opposite side (5) being in the corner to provide a double wall thickness which stabilises and rigidifies the housing particularly in windy and/or snowy conditions. One half or leg of each wire tie or loop (11) is inserted through the holes (13) and tied to the other half round a stake (14) which is external of and supports the housing (2) in use, the stake (14) being on the "centre" line so the "join" (4) is behind the stake (14) when erected so minimising any air gap and decreasing the likelihood of interferences by animals, particularly when the housing is used in agroforestry, that is where animals such as sheep are allowed to graze among the trees.

The housing being an equilateral triangle is extremely rigid in use.

An insert (15) of "Correx" may be used to increase strength and rigidity, with the flutes (16) running transversely to the creases (17) so that the top edge is smooth, and will not damage a plant, particularly as the insert (15) is only half the height of the housing. The insert is folded about its crease lines (17) and interted in the housing (2) and "springs" out to bear against the interior surface of the wall of the housing to rigidify it.

The extension of the "free" side (5) into the corner of the erected housing or tree shelter ensures that the shelder does not collapse or squash, while the insert (15) when used has the same effect.

## Claims

1. Apparatus for protecting a young plant such as a tree during growth, comprising a tubular housing, characterised in that the housing (2) is of substantially triangular configuration in transverse cross-section and in that it is formed from a single blank (3) of material opposite side (4, 5) of which are overlapped so that one edge (5) extends into a corner of the housing (2).

2. Apparatus according to Claim 1, characterised in that the housing (2) is a triangular housing.

3. Apparatus according to Claim 2, characterised in that the edge (4) lies substantially on a centre line of the adjacent side of the housing (2).

4. Apparatus according to any preceding Claim, characterised in that there is securing means (11, 12, 13) adjacent each side (4) (5) whereby the erected housing (2) is mounted substantially upright by securing to a support (14).

5. Apparatus according to Claim 4, characterised in that the support (14) is externally of the housing (2).

6. Apparatus according to Claim 4 or Claim 5, characterised in that the securing means (11, 12, 13) comprises holes (12) adjacent an edge of the side (4), holes (13) adjacent an edge of the side (5), and ties (13) through the holes (12).

7. Apparatus according to Claim 6, characterised in that the holes (12) comprise double holes in that and the ties (13) comprise U-shaped ties the legs of which protrude

EP 0 325 490 A2

through respective ones of the doubles holes (12).

8. Apparatus according to any preceding Claim, characterised in that there is an insert (15) in the housing (2).

9. Apparatus according to Claim 8, characterised in that the insert (15) is formed from a blank of extended fluted material having crease lines (17) transverse to flutes (16) of the blank.

10. Apparatus according to any preceding Claim, characterised in that the housing (2) has a turned over edge (9).

FIG.1.

FIG.2.

FIG.3.